# EUROPÄISCHE PATENTSCHRIFT

(11) **EP 3 794 935 B1**
(45) Veröffentlichungstag und Bekanntmachung des Hinweises auf die Patenterteilung: **09.03.2022**
(21) Anmeldenummer: 19198431.9
(22) Anmeldetag: 19.09.2019
(51) Int. Cl.: A01G 13/06

(54) **BRENNTOPF**
BURNER POT
BAC DE COMBUSTION

(43) Veröffentlichungstag der Anmeldung: 24.03.2021
(73) Patentinhaber: Ender, Markus, 6836 Viktorsberg (AT)
(72) Erfinder: Ender, Markus, 6836 Viktorsberg (AT)
(74) Vertreter: KLIMENT & HENHAPEL

(56) Entgegenhaltungen:
- DE-U- 7 231 746
- ES-U- 1 045 661
- US-A1- 2012 148 966

## Beschreibung

Die Erfindung bezieht sich auf einen Brenntopf zur Sicherung landwirtschaftlicher Kulturen gegen Frost mit einem in einem Behälter aufgenommenen Brennmittel und einem Docht für das Brennmittel, gemäß dem Oberbegriff von Anspruch 1.

Brenntöpfe der genannten Art wurden in der ES 1045661 U und der DE 7231746 U beschrieben. Unterschiedliche Ausführungen von Dochten wurden in der US 2012/148966 A1 beschrieben. Das Auftreten von Spätfrösten im Frühjahr stellt eine große Gefahr für landwirtschaftliche Kulturen, wie zum Beispiel im Weinbau bei allen früh austreibenden und frostempfindlichen Sorten, sowie im Obstbau beispielsweise für Apfel, Kirsche, Marillen und Pfirsich dar. Die pflanzliche Vegetation kann dabei durch einen milden Winter oder Frühling bereits stark vorangeschritten sein, sodass es bereits Anfang März bei Rebstöcken und Obstbäumen zur ersten Blütenbildung kommen kann. Manche Rebstöcke, insbesondere die Burgunder-Sorten, sind grundsätzlich wenig frostresistent. Bei Auftreten negativer Temperaturen erfrieren Blüten oder frostanfällige Rebstöcke, sodass es zu substantiellen Ernteausfällen bis zum Totalausfall kommen kann.

Zur Sicherung landwirtschaftlicher Kulturen gegen Frost ist es bekannt Brenntöpfe mit einem in einem Behälter aufgenommenen Brennmittel und einem Docht für das Brennmittel in der Obst-oder Weinbauanlage aufzustellen. Die Brenntöpfe werden dabei im Abstand weniger Meter voneinander zwischen den Obst- oder Weinbaukulturen aufgestellt und rechtzeitig vor dem Auftreten prognostizierter Minustemperaturen entzündet. Die Minustemperaturen treten erfahrungsgemäß um Vollmond-Nächte auf und dauern in der Regel nur wenige Nächte an. Die Brenntöpfe selbst weisen in herkömmlicher Weise ein festes, wachsförmiges Brennmittel auf, das von einem kübelförmigen Behälter aus einem metallischen Material aufgenommen wird. Bekannt sind beispielsweise wachsförmige Brennmittel aus einem Stearin-Paraffin-Gemisch, die den gesamten Behälter ausfüllen. Als Docht wird in der Regel ein paraffinierter Karton verwendet, der sich dreiecksförmig oder vierecksförmig über die flammzugewandte Oberfläche des wachsförmigen Brennmittels erstreckt und Flammenhöhen von 30-60 cm erzeugt. Das Volumen solcher Brenntöpfe beträgt üblicher Weise etwa 5-8l und der Durchmesser etwa 20cm, sodass sich Punktdochte als nicht mehr zweckmäßig erweisen würden.

Im Zuge der Anwendung der Brenntöpfe als Frostschutz werden die Brenntöpfe rechtzeitig vor Nachtanbruch händisch im Abstand weniger Meter aufgestellt und etwa mittels eines Bunsenbrenners entzündet. Die Aufstelldichte und der Brennwert der Brenntöpfe entscheiden dabei über das Ausmaß der erzielbaren Temperatursteigerung im Nahbereich der Brenntöpfe. Herkömmliche Brenntöpfe verfügen über Brennwerte im Bereich von etwa 20-30 MJ/h, was bei einer gewünschten Temperatursteigerung von beispielsweise etwas über 2°C im Fall von erwarteten Temperaturen von -2°C mehrerer Hundert Frostkerzen pro Hektar bedarf, die rechtzeitig aufgestellt und entzündet werden müssen. Als Brenndauer wird von den Herstellern 10h und mehr versprochen.

Für einen zuverlässigen Frostschutz ist dabei ein sicheres Abbrennen mit einer gleichmäßigen Energiefreisetzungsrate über die gesamte Brenndauer des Brenntopfes wesentlich. In der Praxis zeigt sich jedoch ein stark variierendes Abbrennverhalten der Brenntöpfe. Erfahrungsgemäß können bis zu einem Drittel der Brenntöpfe nicht vollständig entflammt werden, wobei zu berücksichtigen ist, dass im Anwendungsfall Hunderte Brenntöpfe entzündet werden müssen und pro Brenntopf somit nur eine begrenzte Zeit zur Verfügung steht. Zudem zeigt sich insbesondere in Hanglagen ein unzuverlässiges Abbrennverhalten der Brenntöpfe, das von einer über die Brenndauer abnehmenden Energiefreisetzung bis zum frühzeitigen Erlöschen gekennzeichnet ist. Ein solches Abbrennverhalten ist deshalb problematisch, da die tiefsten Nachttemperaturen in der Regel zwischen 4 Uhr morgens bis kurz nach Sonnenaufgang erreicht werden und insbesondere zu dieser Zeit eine ausreichende Energiefreisetzung der Brenntöpfe gewährleistet sein muss. Nicht zuletzt verursachen die derzeit verfügbaren Brenntöpfe erheblichen Abfall, da die Behälter der abgebrannten Brenntöpfe in der Regel entsorgt werden müssen.

Es ist daher das Ziel der Erfindung Brenntöpfe bereit zu stellen, die ein verbessertes Abbrennverhalten während der gesamten Brenndauer aufweisen und auf diese Weise einen zuverlässigeren Frostschutz darstellen.

Dieses Ziel wird durch die Merkmale von Anspruch 1 erreicht. Anspruch 1 bezieht sich auf einen Brenntopf zur Sicherung landwirtschaftlicher Kulturen gegen Frost mit einem Behälter und einem im Behälter aufgenommenen Brennmittel und einem Docht für das Brennmittel, bei dem erfindungsgemäß vorgeschlagen wird, dass der Behälter einen in den Behälter nachfüllbar eingesetzten und durch den entzündeten Docht schmelzbaren Kerzenkörper aufweist, wobei der in den Behälter nachfüllbar eingesetzte Kerzenkörper mit einem stern- oder kreuzförmig über die flammzugewandte Oberfläche des Kerzenkörpers verlaufenden Docht versehen ist, der radial nach außen offene Sektoren des Kerzenkörpers bildet, und mittels eines vom lichten Innenquerschnitt des Behälters abweichenden Querschnitts des Kerzenkörpers zumindest im Bereich eines zwischen zwei äußeren Dochtendkanten liegenden Sektors des Kerzenkörpers ein zwischen dem Kerzenkörper und dem Behälter angeordneter Aufnahmeraum für geschmolzenes Brennmittel gebildet wird.

Der stern- oder kreuzförmig über die flammzugewandte Oberfläche des Kerzenkörpers verlaufende Docht verfügt zunächst über den Vorteil der leichteren vollständigen

Entflammbarkeit im Vergleich zu den herkömmlichen drei- oder vierecksförmigen Dochten, die in der Regel keinen geschlossenen Umfang bilden. Das Entzünden kann über den Kreuzungsbereich des stern- oder kreuzförmigen Dochtes erfolgen, von wo aus sich der Docht radial nach außen bis in seine äußeren Dochtendkanten entzündet. Mit den äußeren Dochtendkanten sind dabei die senkrecht zur flammzugewandten Oberfläche des Kerzenkörpers über die Höhe des Kerzenkörpers verlaufenden Dochtendkanten gemeint, die lediglich in ihren oberen Bereichen über die flammzugewandte Oberfläche des Kerzenkörpers ragen und ansonsten im Kerzenkörper eingebettet sind. Der stern- oder kreuzförmige Docht hat ferner den Vorteil, dass er radial nach außen offene Sektoren des Kerzenkörpers bildet, über die bei Schrägstellung des Brenntopfes geschmolzenes Brennmittel abfließen kann. Hierfür ist für zumindest einen dieser Sektoren ein Aufnahmeraum für geschmolzenes Brennmittel vorgesehen, der mittels eines vom lichten Innenquerschnitt des Behälters abweichenden Querschnitts des Kerzenkörpers gebildet wird. Bei Schrägstellung des Brenntopfes kann der Brenntopf so ausgerichtet werden, dass der Aufnahmeraum im tiefstliegenden Bereich angeordnet ist, sodass geschmolzenes Brennmittel in den Aufnahmeraum abfließen kann und immer eine gleichbleibende Dochtoberfläche für den Brennvorgang zur Verfügung steht. Die gleichbleibende Dochtoberfläche stellt eine gleichmäßige Energiefreisetzungsrate sicher, wobei abgeflossenes Brennmittel innerhalb des Behälters für eine spätere Verbrennung bewahrt wird. Bei herkömmlichen drei- oder vierecksförmigen Dochten zeigt sich im Vergleich dazu, dass sich bei Schrägstellung des Brenntopfes die zur Verbrennung zur Verfügung stehende Dochtoberfläche stark verringern kann, was zu stark abnehmenden Energiefreisetzungsraten insbesondere bei fortgeschrittener Brenndauer und mitunter auch zum vollkommenen Erlöschen des Dochtes führt.

Da für den Frostschutz Hunderte Brenntöpfe eingesetzt werden müssen, ist eine kostengünstige Ausführung der Brenntöpfe entscheidend. Daher wird erfindungsgemäß eine zweigeteilte Ausführung des Brenntopfes vorgeschlagen, wobei im Zuge der Herstellung zunächst der Kerzenkörper zur Sicherstellung des Aufnahmeraumes in einer entsprechenden Form gegossen wird, und der Kerzenkörper in weiterer Folge in den Behälter eingesetzt wird. Diese Ausführung hat auch für den Anwender den Vorteil, dass ein neuer Kerzenkörper in einen bereits verwendeten Behälter eingesetzt werden kann und der Behälter somit nicht mehr entsorgt werden muss. Für den Anwender verringern sich sogar die Nachfolgekosten, da in der Regel nur mehr die Kerzenkörper neu beschafft werden müssen, aber nicht mehr die Behälter.

Eine mögliche Ausführung sieht vor, dass der Aufnahmeraum durch eine sich zumindest abschnittsweise über die Höhe des Kerzenkörpers erstreckende Ausnehmung des Kerzenkörpers gebildet wird, was durch entsprechende Gießformen für den Kerzenkörper erreicht werden kann.

Der Aufnahmeraum ist zugunsten eines maximalen Brennstoffvolumens möglichst klein zu wählen. In diesem Sinn wird vorgeschlagen, dass die Querschnittsfläche des Kerzenkörpers im Bereich des Aufnahmeraums einen Wert im Bereich von 80-95% der lichten Innenquerschnittsfläche des Behälters annimmt.

Gemäß einer weiteren Ausführungsform kann der Aufnahmeraum auch mittels eines in seiner geometrischen Form vom lichten Innenquerschnitt des Behälters abweichenden Querschnitts des Kerzenkörpers gebildet werden.

Des Weiteren wird vorgeschlagen, dass der Aufnahmeraum eine um den Mittelpunkt des Behälters symmetrische Anordnung aufweist. Diese Ausführungsform hat den Vorteil, dass bei Schrägstellung des Brenntopfes die Ausrichtung des Brenntopfes relativ zur Hanglage nun nicht mehr entscheidend ist, da jedenfalls ein Abfließen des geschmolzenen Brennmittels in den Aufnahmeraum erfolgen kann.

Eine solche Verwendung eines in einen Behälter nachfüllbar einsetzbaren und durch einen entzündeten Docht schmelzbaren Kerzenkörpers mit einem stern- oder kreuzförmig über die flammzugewandte Oberfläche des Kerzenkörpers verlaufenden Docht als Brenntopf ermöglicht eine zuverlässige Sicherung landwirtschaftlicher Kulturen gegen Frost, wobei mittels eines vom lichten Innenquerschnitt des Behälters abweichenden Querschnitts des Kerzenkörpers zumindest im Bereich eines zwischen zwei äußeren Dochtendkanten liegenden Sektors des Kerzenkörpers ein zwischen dem Kerzenkörper und dem Behälter angeordneter Aufnahmeraum für geschmolzenes Brennmittel gebildet wird.

Die Erfindung wird in weiterer Folge anhand von Ausführungsbeispielen mithilfe der beiliegenden Figuren näher erläutert. Es zeigen hierbei die
Fig. 1a eine Ausführungsform eines erfindungsgemäßen Brenntopfes von oben gesehen,
Fig. 1b eine Schnittansicht der Ausführungsform der Fig. 1a entlang der Schnittebene B-B,
Fig. 1c eine Schnittansicht der Ausführungsform der Fig. 1a entlang der Schnittebene C-C,
Fig. 2a eine weitere Ausführungsform eines erfindungsgemäßen Brenntopfes von oben gesehen,
Fig. 2b eine Schnittansicht der Ausführungsform der Fig. 2a entlang der Schnittebene B-B,
Fig. 2c eine Schnittansicht der Ausführungsform der Fig. 2a entlang der Schnittebene C-C.

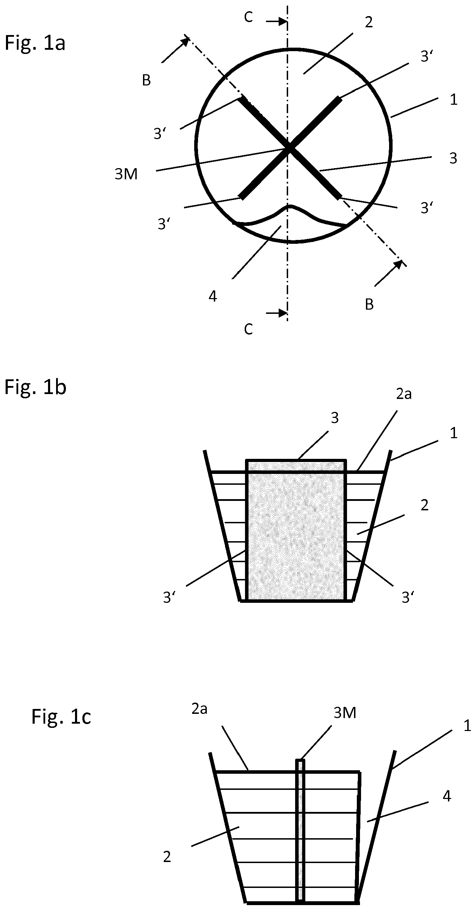

Zunächst wird auf die Fig. 1a-c Bezug genommen, die eine erste Ausführungsform eines erfindungsgemäßen Brenntopfes mit einem Behälter 1 und einem in den Behälter 1 eingesetzten Kerzenkörper 2 zeigen. Der Behälter 1 ist aus einem Blech gefertigt und verfügt in der Regel über einen Tragbügel. Der Kerzenkörper 2 ist aus einem Gemisch aus Paraffin und pflanzlichen Ölen gefertigt und ist in den Behälter 1 einsetzbar. Der Brenntopf ist somit grundsätzlich zweigeteilt ausgeführt, wobei im Zuge der Herstellung zunächst der Kerzenkörper 2 in einer entsprechenden Form gegossen wird, und der Kerzenkörper 2 in weiterer Folge in den Behälter 1 eingesetzt wird.

Im Kerzenkörper 2 ist des Weiteren ein Docht 3, beispielsweise aus einem paraffinierten Karton, angeordnet. Der Docht 3 umfasst zwei gekreuzte Flächendochte, die somit über die flammzugewandte Oberfläche 2a des Kerzenkörpers 2 stern- oder kreuzförmig verlaufen. Das Entzünden kann über den Kreuzungsbereich 3M des kreuzförmigen Dochtes 3 erfolgen, von wo aus sich der Docht 3 bis in seine äußeren Dochtendkanten 3' entzündet. Der kreuzförmige Docht 3 definiert vier radial nach außen offene Sektoren des Kerzenkörpers 2, über die bei Schrägstellung des Brenntopfes geschmolzenes Brennmittel abfließen kann. Hierfür ist für zumindest einen dieser Sektoren - in der Fig. 1a beispielsweise für den unteren Sektor - ein Aufnahmeraum 4 für geschmolzenes Brennmittel vorgesehen, der mittels eines vom lichten Innenquerschnitt des Behälters 1 abweichenden Querschnitts des Kerzenkörpers 2 gebildet wird. Im Ausführungsbeispiel der Fig. 1 wird dieser Aufnahmeraum 4 mithilfe einer sich zumindest abschnittsweise über die Höhe des Kerzenkörpers 2 erstreckenden Ausnehmung des Kerzenkörpers 2 verwirklicht, die nach dem Einsetzen des Kerzenkörpers 2 in den Behälter 1 gemeinsam mit der Innenwand des Behälters 1 den Aufnahmeraum 4 bildet.

Der Aufnahmeraum 4 ist zugunsten eines maximalen Brennstoffvolumens möglichst klein zu wählen. Vorzugsweise nimmt die Querschnittsfläche des Kerzenkörpers 2 im Bereich des Aufnahmeraums 4 einen Wert im Bereich von 80-95% der lichten Innenquerschnittsfläche des Behälters 1 an. Bei Schrägstellung des Brenntopfes kann der Brenntopf nun so ausgerichtet werden, dass der Aufnahmeraum 4 im tiefstliegenden Bereich angeordnet ist, sodass geschmolzenes Brennmittel in den Aufnahmeraum 4 abfließen kann und immer eine gleichbleibende Dochtoberfläche für den Brennvorgang zur Verfügung steht.

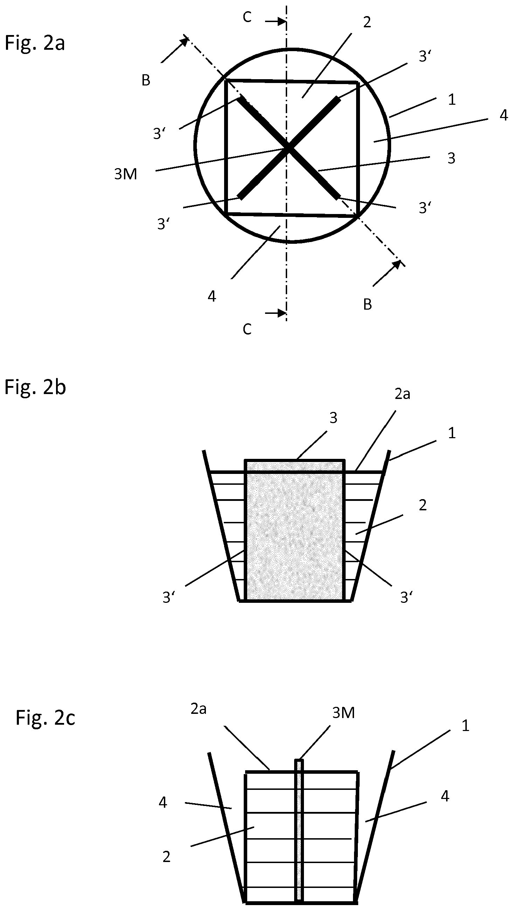

Im Ausführungsbeispiel der Fig. 2 wird dieser Aufnahmeraum 4 mithilfe eines in seiner geometrischen Form vom lichten Innenquerschnitt des Behälters 1 abweichenden Querschnitts des Kerzenkörpers 2 verwirklicht, die nach dem Einsetzen des Kerzenkörpers 2 in den Behälter 1 gemeinsam mit der Innenwand des Behälters 1 den Aufnahmeraum 4 bildet. Im Ausführungsbeispiel der Fig. 2 handelt es sich bei der geometrischen Form des lichten Innenquerschnitts des Behälters 1 um einen Kreis, und bei jener des Kerzenkörpers 2 um ein Quadrat, das in den kreisförmigen Innenquerschnitts des Behälters 1 im Wesentlichen eingeschrieben ist.

Bei Schrägstellung des Brenntopfes ist die Ausrichtung des Brenntopfes relativ zur Hanglage nun nicht mehr entscheidend, da jedenfalls ein Abfließen des geschmolzenen Brennmittels in den Aufnahmeraum 4 erfolgen kann und immer eine gleichbleibende Dochtoberfläche für den Brennvorgang zur Verfügung steht. Die gleichbleibende Dochtoberfläche stellt eine gleichmäßige Energiefreisetzungsrate sicher, wobei abgeflossenes Brennmittel innerhalb des Behälters 1 für eine spätere Verbrennung bewahrt wird. Des Weiteren ist es möglich, dass ein neuer Kerzenkörper 2 in einen bereits verwendeten Behälter 1 eingesetzt werden kann und der Behälter 1 somit nicht mehr entsorgt werden muss.

Die erfindungsgemäßen Brenntöpfe zeigen somit ein verbessertes Abbrennverhalten während der gesamten Brenndauer und stellen auf diese Weise einen zuverlässigen Frostschutz dar.

## Patentansprüche

1. Brenntopf zur Sicherung landwirtschaftlicher Kulturen gegen Frost mit einem Behälter (1) und einem im Behälter (1) aufgenommenen Brennmittel und einem Docht (3) für das Brennmittel, **dadurch gekennzeichnet, dass** der Behälter (1) einen in den Behälter (1) nachfüllbar eingesetzten und durch den entzündeten Docht (3) schmelzbaren Kerzenkörper (2) aufweist, wobei der in den Behälter (1) nachfüllbar eingesetzte Kerzenkörper (2) mit einem stern- oder kreuzförmig über die flammzugewandte Oberfläche (2a) des Kerzenkörpers (2) verlaufenden Docht (3) versehen ist, der radial nach außen offene Sektoren des Kerzenkörpers bildet, und mittels eines vom lichten Innenquerschnitt des Behälters (1) abweichenden Querschnitts des Kerzenkörpers (2) zumindest im Bereich eines zwischen zwei äußeren Dochtendkanten (3') liegenden Sektors des Kerzenkörpers (2) ein zwischen dem Kerzenkörper (2) und dem Behälter (1) angeordneter Aufnahmeraum (4) für geschmolzenes Brennmittel gebildet wird.

2. Brenntopf nach Anspruch 1, **dadurch gekennzeichnet, dass** der Aufnahmeraum (4) durch eine sich zumindest abschnittsweise über die Höhe des Kerzenkörpers (2) erstreckende Ausnehmung des Kerzenkörpers (2) gebildet wird.

3. Brenntopf nach Anspruch 1 oder 2, **dadurch gekennzeichnet, dass** die Querschnittsfläche des Kerzenkörpers (2) im Bereich des Aufnahmeraums (4) einen Wert im Bereich von 80-95% der lichten Innenquerschnittsfläche des Behälters (1) annimmt.

4. Brenntopf nach einem der Ansprüche 1 bis 3, **dadurch gekennzeichnet, dass** der Aufnahmeraum (4) mittels eines in seiner geometrischen Form vom lichten Innenquerschnitt des Behälters (1) abweichenden Querschnitts des Kerzenkörpers (2) gebildet wird.

5. Brenntopf nach einem der Ansprüche 1 bis 4, **dadurch gekennzeichnet, dass** der Aufnahmeraum (4) eine um den Mittelpunkt des Behälters (1) symmetrische Anordnung aufweist.

## Claims

1. Smudge pot for protecting agricultural crops against frost, having a container
(1) and a fuel accommodated in the container (1) and a wick (3) for the fuel, **characterized in that** the container (1) has a candle body (2) which is inserted into the container (1) in a refillable manner and can be melted by the ignited wick (3), wherein the candle body (2), which is refillably inserted into the container (1), is provided with a wick (3) which extends in a star-shaped or cross-shaped manner over the flame-facing surface (2a) of the candle body
(2) and forms radially outwardly open sectors of the candle body, and by means of a cross-section of the candle body (2) deviating from the clear inner cross-section of the container (1), at least in the region of a sector of the candle body (2) lying between two outer wick end edges (3'), a receiving space (4) for molten fuel arranged between the candle body (2) and the container (1) is formed.

2. Smudge pot according to claim 1, **characterized in that** the receiving space (4) is formed by a recess of the candle body (2) extending at least in sections over the height of the candle body (2).

3. Smudge pot according to claim 1 or 2, **characterized in that** the cross-sectional area of the candle body (2) in the region of the receiving space (4) assumes a value in the range of 80-95% of the clear inner cross-sectional area of the container (1).

4. Smudge pot according to one of claims 1 to 3, **characterized in that** the receiving space (4) is formed by means of a cross-section of the candle body (2) deviating in its geometrical shape from the clear inner cross-section of the container (1).

5. Smudge pot according to one of claims 1 to 4, **characterized in that** the receiving space (4) has a symmetrical arrangement about the center of the container (1).

## Revendications

1. Chaufferette pour la protection des cultures agricoles contre le gel, avec un récipient (1) et un combustible contenu dans le récipient (1) et une mèche (3) pour le combustible, **caractérisée en ce que** le récipient (1) présente une bougie (2) introduite de façon rechargeable dans le récipient (1) et pouvant être fondue par la mèche (3) allumée, laquelle bougie (2) introduite de façon rechargeable dans le récipient (1) est munie d'une mèche (3) passant en forme d'étoile ou de croix au-dessus de la surface de la bougie (2) tournée vers la flamme (2a) et formant des secteurs de la bougie ouverts vers l'extérieur dans le sens radial, et une section de la bougie (2) différente de la section intérieure libre du récipient (1) forme, au moins au niveau d'un secteur de la bougie (2) situé entre deux arêtes d'extrémité de la mèche (3'), un espace de collecte (4) disposé entre la bougie (2) et le récipient (1) pour du combustible fondu.

2. Chaufferette selon la revendication 1, **caractérisée en ce que** l'espace de collecte (4) est formé par un évidement de la bougie (2) qui s'étend au moins par secteurs sur la hauteur de la bougie (2).

3. Chaufferette selon la revendication 1 ou 2, **caractérisée en ce que** l'aire de section de la bougie (2) au niveau de l'espace de collecte (4) occupe entre 80 et 95 % de l'aire de section intérieure libre du récipient (1).

4. Chaufferette selon l'une des revendications 1 à 3, **caractérisée en ce que** l'espace de collecte (4) est formé au moyen d'une section de la bougie (2) dont la forme géométrique est différente de la section intérieure libre du récipient (1).

5. Chaufferette selon l'une des revendications 1 à 4, **caractérisée en ce que** l'espace de collecte (4) présente une disposition symétrique autour du centre du récipient (1).
